# EUROPÄISCHE PATENTSCHRIFT

(11) **EP 1 614 921 B1**
(45) Veröffentlichungstag und Bekanntmachung des Hinweises auf die Patenterteilung: **22.08.2007**
(21) Anmeldenummer: 05013632.4
(22) Anmeldetag: 24.06.2005
(51) Int. Cl.: F16D 48/06, H02P 8/22

(54) **Verfahren zum Einstellen eines Kupplungsmoments**
Method of setting a clutch torque
Procédé de réglage de couple d'un embrayage

(30) Priorität: 10.07.2004 DE 102004033489
(43) Veröffentlichungstag der Anmeldung: 11.01.2006
(60) Teilanmeldung: 06025633.6
(73) Patentinhaber: LuK Lamellen und Kupplungsbau Beteiligungs KG, 77815 Bühl (DE)
(72) Erfinder: Gerhart, Jürgen, 77767 Appenweier (DE); Werner, Olaf, Dr., 77815 Bühl (DE); Göppert, Georg, 79336 Herbolzheim (DE)

(56) Entgegenhaltungen:
- EP-A- 1 270 978
- WO-A-02/101258
- DE-A1- 19 723 393
- US-A1- 2004 108 829
- PICKUP I E D ET AL: "ANALYSIS OF CURRENT WAVEFORMS IN PERMANENT-MAGNET SYNCHRONOUS/STEPPING MOTORS AND SYNTHESIS OF A STABILISING SIGNAL" IEE PROCEEDINGS B. ELECTRICAL POWER APPLICATIONS, INSTITUTION OF ELECTRICAL ENGINEERS. STEVENAGE, GB, Bd. 139, Nr. 6, 1. November 1992 (1992-11-01), Seiten 534-548, XP000343945
- PAVLAT J: "A NEW LOOK AT MICROSTEPPING" MACHINE DESIGN, PENTON/IPC, CLEVELAND, US, Bd. 61, Nr. 6, 23. März 1989 (1989-03-23), Seiten 79-83, XP000024695 ISSN: 0024-9114

## Beschreibung

Die Erfindung betrifft ein Verfahren zum Einstellen des Kupplungsmoments einer insbesondere in einem Antriebsstrang eines Kraftfahrzeugs angeordneten Kupplung, wobei die Kupplung mit Hilfe eines Kupplungsaktors verstellt wird.

Ein derartiges Verfahren ist aus der Praxis bekannt. Dabei weist der Kupplungsaktor einen Servomotor auf, der als Aktorteile einen Stator mit einer Wicklung und einen Läufer mit abwechselnd in zueinander entgegengesetzte Richtungen magnetisierten Permanentmagnetsegmenten hat. Aufgrund der Permanentmagnetsegmente ergibt sich eine Rastierung der Aktorteile, d.h. die Positionen, an denen die Aktorteile im Stillstand relativ zueinander positioniert sind, sind an Rasterpunkten eines Positionsrasters angeordnet. Zum Aufeinanderzu- und Voneinanderwegbewegen der Kupplungsteile der Kupplung und somit zum Einstellen des Kupplungsmoments steht der Servomotor über ein selbsthemmendes Getriebe mit einer Ausrückeinrichtung der Kupplung in Antriebsverbindung. Zum Einstellen des Kupplungsmoments wird zunächst ein dem Kupplungsmoment entsprechender Sollwert für die Relativposition der Kupplungsteile ermittelt, der zwischen den Rasterwerten des Positionsrasters liegen kann. Dann werden die Aktorteile durch entsprechendes Bestomen der Wicklung an einem zu dem Positions-Sollwert benachbarten Rasterwert des Positionsrasters relativ zueinander positioniert. Bei Erreichen des Rasterwerts wird der Servomotor abgeschaltet und die aktuelle Position aufgrund der Selbsthemmung des Kupplungsaktors stromlos gehalten. Aufgrund der Rastierung des Kupplungsaktors lässt sich die Kupplung nur in Stufen verstellen. Dadurch wird die Einstellgenauigkeit des Kupplungsmoments begrenzt. Bei einem lagegeregelten Servomotor mit inkrementaler Positionsmessung kann die Einstellgenauigkeit des Kupplungsmoments auch durch die Auflösung der Inkremente beeinflusst werden, sofern diese Auflösung gröber ist als der Rasterabstand der Rastierungen und/oder die Rasterwerte des Positionsrasters nicht mit denjenigen der Inkrementalwegmessung übereinstimmen. Schließlich ist die Ausrückeinrichtung aufgrund der Elastizität ihrer Bauteile und der beim Verstellen auftretenden Reibung mit einer Weghysterese behaftet, die zur Folge haben kann, dass die Relativpositionierung der Aktorteile nicht oder nur teilweise in einen entsprechenden Verstellweg der Kupplung umgesetzt wird. In Abhängigkeit von dem jeweils an der Ausrückeinrichtung vorhandenen Hysteresewert und der Richtung, in welche die Relativverstellung der Kupplungsteile erfolgt, können daher zusätzliche Ungenauigkeiten bei der Einstellung des Kupplungsmoments auftreten.

Aus der DE 197 23 393 A1 ist ein Kraftfahrzeug mit einer Antriebseinheit, einem Getriebe und einem Drehmomentübertragungssystem im Antriebsstrang, sowie mit einer Vorrichtung zur automatisierten Betätigung der Übersetzungseinstellung des Getriebes und/oder zur automatisierten Betätigung des Drehmomentsübertragungssystems, mit zumindest einer Steuereinheit und zumindest einem von der Steuereinheit ansteuerbaren Aktor zur automatisierten Betätigung von Getriebe und/oder Drehmomentsübertragungssystem bekannt, wobei der zumindest eine Aktor zumindest eine Antriebseinheit, wie beispielsweise einen Elektromotor, aufweist.

Die US 2004/0108829 A1 bezieht zieht sich auf den Gebrauch eines Schrittmotors als eine Relativpositionsvorrichtung.

Es besteht deshalb die Aufgabe, ein Verfahren der zum Einstellen des Kupplungsmoments einer Kupplung zu schaffen, das eine hohe Einstellgenauigkeit des Kupplungsmoments ermöglicht.

Diese Aufgabe wird dadurch gelöst, dass die Kupplung mit Hilfe eines Kupplungsaktors verstellt wird, der mindestens zwei Aktorteile aufweist, die an Rasterwerten eines Positionsrasters relativ zueinander positionierbar sind, dass ein einem Kupplungsmoment-Sollwert entsprechender, zwischen den Rasterwerten des Positionsrasters angeordneter Positions-Sollwert für die Aktorteile ermittelt wird, dass die Aktorteile an einem zu dem Positions-Sollwert benachbarten Rasterwert des Positionsrasters relativ zueinander positioniert werden, dass zusätzlich zu dem ersten Positions-Rasterwert ein zweiter Positions-Rasterwert derart ermittelt wird, dass der Positions-Sollwert zwischen dem ersten Positions-Rasterwert und dem zweiten Positions-Rasterwert angeordnet ist, und dass die Aktorteile derart abwechselnd an dem ersten Positions-Rasterwert und dem zweiten Positions-Rasterwert positioniert werden, dass das mittlere Kupplungsmoment genauer mit dem Kupplungsmoment-Sollwert übereinstimmt, als die Kupplungsmomente des ersten und zweiten Positions-Rasterwerts.

In vorteilhafter Weise werden also während der Dauer, während der der Kupplungsmoment-Sollwert eingestellt werden soll, die Aktorteile ständig wechselweise an beidseits des eigentlich einzustellenden Positions-Sollwert angeordneten Positions-Rasterwerten relativ zueinander positioniert, so dass der Mittelwert des über diese Dauer von der Kupplung übertragen Kupplungsmoments zwischen den Kupplungsmomenten liegt, die den genannten Positions-Rasterwerten entsprechen. Das Verfahren ermöglicht dadurch gegenüber einem Verfahren, bei dem nur ein Positions-Rasterwert angesteuert wird, eine höhere Einstellgenauigkeit des Kupplungsmoments. Bei einer Kupplungseinrichtung, die in einem Antriebsstrang eines Kraftfahrzeugs angeordnet ist, wird die Frequenz, mit der die Umschaltung zwischen den beidseits des Positions-Sollwerts angeordneten Positions-Rasterwerten erfolgt, vorzugsweise derart gewählt, dass sie von der Rupffrequenz des Antriebsstrangs abweicht, damit möglichst keine Eigenfrequenzen in dem Antriebsstrang angeregt werden Erfindungsgemäß wird die Frequenz zwischen den beiden Positions-Rasterwerten kleiner als die Rupffrequenz der Kupplung und größer als die Eckfrequenz des Gesamtsystems der Kupplungsaktorik, beispielsweise bestehend aus Antriebsmotor, hydraulische Strecke mit Geberzylinder und Nehmerzylinder sowie nachfolgender Ausrückmechanik, gewählt. Die Eckfrequenz des Gesamtsystems kann auch als inverse Antwortzeit des Gesamtsystems aufgefasst werden. Weiterhin sollte die Frequenz, mit der die Umschaltung zwischen den beidseits des Positions-Sollwerts angeordneten Positions-Rasterwerten erfolgt, höher sein als die maximale Verstellfrequenz des Komplettsystems, bestehend aus dem Kupplungsaktor, der Ausrückeinrichtung der Kupplung und einer eventuellen Signalverarbeitungseinrichtung zur Bestimmung des Positions-Sollwerts, des ersten und zweiten Positions-Rasterwerts und/oder zur Ansteuerung des Kupplungsaktors. Die maximale Frequenz, mit der die Umschaltung zwischen den beidseits des Positions-Sollwerts angeordneten Positions-Rasterwerten erfolgt, ist durch die Verstellzeit des Kupplungsaktors nach oben begrenzt.

Bei einer vorteilhaften Ausführungsform der Erfindung wird ein dem Positions-Sollwert entsprechendes Positions-Sollwertsignal generiert, wobei diesem Positions-Sollwertsignal ein einen Wechselsignalanteil enthaltendes Überlagerungssignal derart überlagert wird, dass das Summensignal aus dem Positions-Sollwertsignal und dem Überlagerungssignal im Wesentlichen in dem Positionsraster liegt, und wobei mit dem Summensignal als Sollwertsignal der Kupplungsaktor angesteuert wird. Die Amplitude der Pulsweitenmodulation kann im Rahmen der durch die Rastierungen vorgegebenen Einstellmöglichkeiten frei gewählt werden. Günstigerweise wählt man einen kleinen Wert, bei dem die durch die Pulsweitenmodulation entstehenden Schwingungen von einem im Innenraum des Kraftfahrzeugs befindlichen Benutzer der Kraftfahrzeugs nicht bemerkt werden.

Bei einer bevorzugten Ausführungsform der Erfindung wird das Überlagerungssignal in Abhängigkeit von der Lage des Positions-Sollwerts relativ zu dem ersten und zweiten Positions-Rasterwert pulsweitenmoduliert. Dadurch wird eine noch größere Einstellgenauigkeit des Kupplungsmoments ermöglicht. Es können praktisch beliebige Kupplungsmoment-Zwischenwerte zwischen den Kupplungsmomenten des ersten und zweiten Positions-Rasterwerts eingestellt werden.

Bei einer zweckmäßigen Ausgestaltung der Erfindung wird das Überlagerungssignal mit konstanter Periodendauer pulsweitenmoduliert, wobei das Puls-Pausen-Verhältnis in Abhängigkeit von der Lage des Positions-Sollwerts relativ zu dem ersten und zweiten Positions-Rasterwert verändert wird. Der Kupplungsaktor kann dann auf einfache Weise mit Hilfe eines Mikrocomputers angesteuert werden, wobei der Mikrocomputer die Positions-Sollwerte in einem festen Zeittakt ermitteln kann.

Bei einer anderen Ausführungsform der Erfindung wird das Überlagerungssignal mit konstanter Pulsdauer pulsweitenmoduliert, wobei die Pausendauer in Abhängigkeit von der Lage des Positions-Sollwerts relativ zu dem ersten und zweiten Positions-Rasterwert verändert wird. Die Pulse können dann mit fester Pulsdauer auf einfache Weise hardwaremäßig generiert werden.

Selbstverständlich ist es aber auch möglich, dass das Überlagerungssignal mit konstanter Pausendauer pulsweitenmoduliert wird, und dass die Pulsdauer in Abhängigkeit von der Lage des Positions-Sollwerts relativ zu dem ersten und zweiten Positions-Rasterwert verändert wird.

Vorteilhaft ist, wenn der Wechselsignalanteil eine Grundfrequenz aufweist, die zwischen 2 und 8 Hz, gegebenenfalls zwischen 3 und 7 Hz, insbesondere zwischen 4 und 6 Hz liegt und bevorzugt etwa 5 Hz beträgt. Die Grundfrequenz ist dann bei für die Verwendung im Antriebsstrang eines Kraftfahrzeugs üblichen Kupplungen größer als die maximale Verstellfrequenz des Komplettsystems, bestehend aus Kupplungsaktor, Ausrückeinrichtung, Kupplung und Signalverarbeitungseinrichtung und kleiner als die Rupffrequenz des Antriebsstrangs.

Nachfolgend sind Ausführungsbeispiele der Erfindung anhand der Zeichnung näher erläutert. Es zeigen:
- Fig. 1: einen Antriebsstrang eines Kraftfahrzeugs,
- Fig. 2: eine graphische Darstellung der Relativposition zweier Aktorteile eines Kupplungsaktors, wobei auf der Abszisse die Zeit t und auf der Ordinate die Position x dargestellt ist, und wobei strichliniert Rasterwerte eines Positionsrasters markiert sind, in dem die Aktorteile relativ zueinander positionierbar sind,

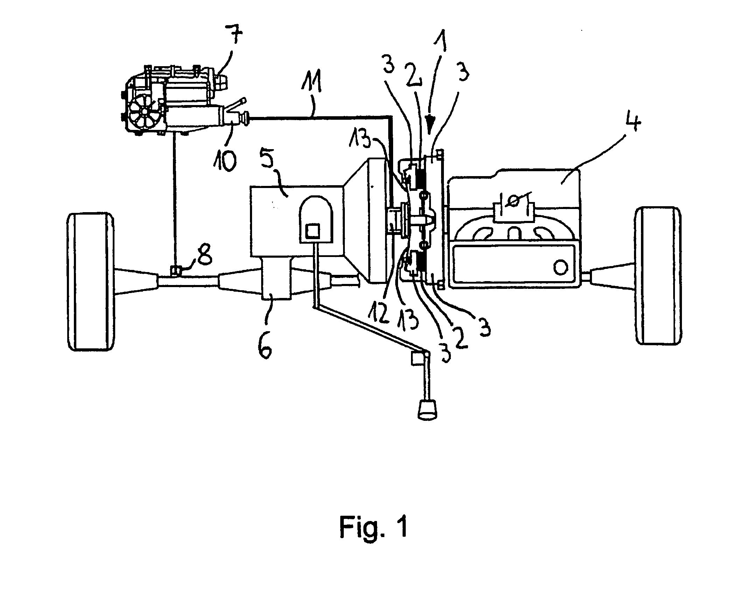

Eine in einem in Fig. 1 schematisch dargestellten Antriebsstrang eines Kraftfahrzeugs angeordnete Kupplungseinrichtung weist eine Kupplung 1 auf, die als Kupplungsteile eine Kupplungsscheibe 2 mit einem Reibbelag und zwei beidseits der Kupplungsscheibe 2 angeordnete Druckelemente 3 hat, die mit Hilfe einer Ausrückeinrichtung aufeinander zu- und voneinander wegbewegbar sind. Die Druckelemente 3 sind mit der Welle eines Verbrennungsmotors 4 und die Kupplungsscheibe 2 ist mit der Antriebswelle eines Schaltgetriebes 5 verbunden. Eine Abtriebswelle des Schaltgetriebes 5 steht über ein Differential 6 mit den Antriebsrädern des Kraftfahrzeugs in Antriebsverbindung.

Die Betätigungseinrichtung weist einen Kupplungsaktor 7 auf, der als EC-Motor ausgebildet ist. Der Kupplungsaktor 7 hat als Aktorteile einen Stator mit einer Wicklung und einen drehbar an dem Stator gelagerten Läufer, der an seinem Umfang eine Folge von permanentmagnetischen Magnetsegmenten hat, die abwechselnd in zueinander entgegengesetzte Richtungen magnetisiert sind und mit dem Stator über einen Luftspalt magnetisch zusammenwirken. Zum Positionieren des Läufers relativ zu dem Stator ist die Wicklung des Kupplungsaktors 7 über eine Endstufe mit einer Steuereinrichtung verbunden. Als Lagesensoren sind am Stator mehrere in Umfangsrichtung zueinander versetzte, in der Zeichnung nicht näher dargestellte Magnetfeldsensoren vorgesehen, die mit den Magnetsegmenten des Läufers zusammenwirken. Zur inkrementalen Messung der Relativposition zwischen dem Läufer und dem Stator und zur Steuerung der Kommutierung der Wicklung in Abhängigkeit von der gemessenen Relativposition sind die Magnetfeldsensoren mit Messsignaleingängen der Steuereinrichtung verbunden. An der Steuereinrichtung ist außerdem mindestens ein Raddrehzahlsensor 8 angeschlossen.

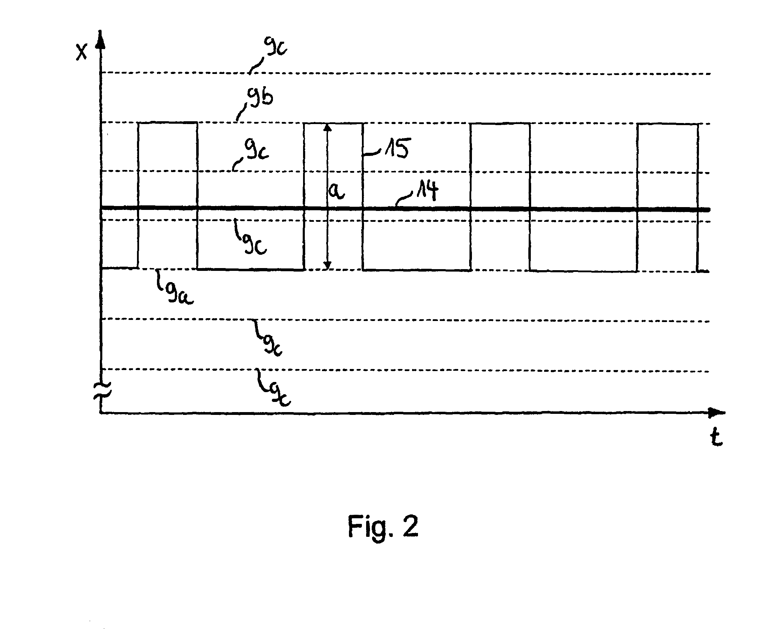

Der Läufer weist bestimmte Vorzugstellungen auf, die ein Positionsraster definieren. In stromlosem Zustand nimmt die Läuferposition jeweils einen der Rasterwerte 9a, 9b, 9c des Positionsrasters ein, von denen einige in Fig. 2 strichliniert markiert sind. Wenn der Läufer zwischen zwei Rasterwerten 9a, 9b, 9c positioniert wird, tritt zwischen dem Läufer und dem Stator ein Rastmoment auf, das dadurch verursacht ist, dass die Magnetsegmente des Läufers mit an dem Stator angeordneten Zähnen über den Luftspalt magnetisch zusammenwirken. Durch Bestromen der Wicklung kann der Läufer an jedem der Rasterwerte des Positionsrasters positioniert werden.

In Fig. 1 ist erkennbar, dass der Kupplungsaktor 7 über eine Ausrückeinrichtung mit der Kupplung 1 in Antriebsverbindung steht. Die Ausrückeinrichtung weist ein von dem Kupplungsaktor 7 angetriebenes Übersetzungsgetriebe auf, das mit einem hydraulischen Geberzylinder 10 in Antriebsverbindung steht, der über eine Hydraulikleitung 11 an einem Nehmerzylinder 12 angeschlossen ist. Der Nehmerzylinder 12 steht zum Einstellen des von der Kupplung 1 übertragenen Drehmoments entgegen der Rückstellkraft einer Membranfeder 13 mit den Druckelementen 3 in Antriebsverbindung.

Mit Hilfe der Steuereinrichtung ist der Läufer an jeder der Rasterwerte des Positionsrasters relativ zu dem Stator positionierbar. Zum Einstellen eines mit Hilfe der Steuereinrichtung ermittelten, über die Kupplung 1 von der Welle des Verbrennungsmotors 4 auf die Antriebswelle des Schaltgetriebes 5 zu übertragenden Kupplungsmoment-Sollwerts wird zunächst in der Steuereinrichtung ein Positions-Sollwert ermittelt. Das entsprechende Positions-Sollwertsignal ist in Fig. 2 mit 14 bezeichnet. Wenn der Positions-Sollwert mit einem der Rasterwerte 9a, 9b, 9c des Positionsrasters übereinstimmt, wird der Kupplungsaktor an dem entsprechenden Rasterwert 9a, 9b, 9c positioniert.

Wenn der Positions-Sollwert dagegen mit keinem der Rasterwerte 9 des Positionsrasters übereinstimmt, werden mindestens ein erster Rasterwert 9a und zumindest ein zweiter Rasterwert 9b ermittelt, die den Positions-Sollwert zwischen sich einschließen. Dann werden die Aktorteile für die Dauer, während der das entsprechende Kupplungsmoment eingestellt werden soll, derart abwechselnd an dem ersten Positions-Rasterwert 9a und dem zweiten Positions-Rasterwert 9b positioniert, dass das mittlere Kupplungsmoment mit dem Kupplungsmoment-Sollwert übereinstimmt.

In Fig. 2 ist erkennbar, dass dazu dem Positions-Sollwertsignal 14 ein einen Wechseisignalanteil enthaltendes, pulsweitenmoduliertes Überlagerungssignal derart überlagert wird, dass das Summensignal 15 aus dem Positions-Sollwertsignal 14 und dem Überlagerungssignal zwischen seinen Flanken in dem Positionsraster liegt. In Fig. 2 ist die Amplitude des Wechselsignalanteils mit a bezeichnet. Entsprechend dem auf diese Weise erhaltenen Summensignals 15 wird der Kupplungsaktor 7 positioniert.

In Fig. 2 ist erkennbar, dass das Puls-Pausen-Verhältnis und die Rasterwerte 9a, 9b derart aufeinander abgestimmt sind, dass das Integral des Summensignals 15 über die Periodendauer des Wechselsignalanteils mit dem entsprechenden Integral des Positions-Sollwertsignals 14 übereinstimmt.

Die Grundfrequenz des Wechselsignalanteils ist soweit von der Rupffrequenz des Antriebsstrangs beabstandet, dass durch den Wechselsignalanteil keine Eigenfrequenzen in dem Antriebsstrang angeregt werden. Die Grundfrequenz liegt außerdem zwischen der maximalen Verstellfrequenz des Komplettsystems, bestehend aus dem Kupplungsaktor 7, der Ausrückeinrichtung der Kupplung 1 und der Steuereinrichtung und der maximalen Verstellfrequenz des Kupplungsaktors.

### Bezugszeichenliste

- 1: Kupplung
- 2: Kupplungsscheibe
- 3: Druckelement
- 4: Verbrennungsmotor
- 5: Schaltgetriebe
- 6: Differential
- 7: Kupplungsaktor
- 8: Raddrehzahlsensor
- 9a: erster Rasterwert
- 9b: zweiter Rasterwert
- 9c: Rasterwert
- 10: Geberzylinder
- 11: Hydraulikleitung
- 12: Nehmerzylinder
- 13: Membranfeder
- 14: Positions-Sollwertsignal
- 15: Summensignal

## Patentansprüche

1. Verfahren zum Einstellen des Kupplungsmoments einer insbesondere in einem Antriebsstrang eines Kraftfahrzeugs angeordneten Kupplung (1), wobei die Kupplung (1) mit Hilfe eines Kupplungsaktors (7) verstellt wird, der mindestens zwei Aktorteile aufweist, die an Rasterwerten (9a, 9b, 9c) eines Positionsrasters relativ zueinander positionierbar sind, wobei ein einem Kupplungsmoment-Sollwert entsprechender, zwischen den Rasterwerten (9a, 9b, 9c) des Positionsrasters angeordneter Positions-Sollwert ermittelt wird, und wobei die Aktorteile an einem zu dem Positions-Sollwert benachbarten Rasterwert (9a) des Positionsrasters relativ zueinander positioniert werden, **dadurch gekennzeichnet, dass** zusätzlich zu dem ersten Positions-Rasterwert (7a) ein zweiter Positions-Rasterwert (9b) derart ermittelt wird, dass der Positions-Sollwert zwischen dem ersten Positions-Rasterwert (9a) und dem zweiten Positions-Rasterwert (9b) angeordnet ist, und dass die Aktorteile derart abwechselnd an dem ersten Positions-Rasterwert (9a) und dem zweiten Positions-Rasterwert (9b) positioniert werden, dass das mittlere Kupplungsmoment genauer mit dem Kupplungsmoment-Sollwert übereinstimmt, als die Kupplungsmomente des ersten und zweiten Positions-Rasterwerts (9a, 9b), wobei das abwechselnde Positionieren einen Wechselsignalanteil mit einer Frequenz aufweist, die zwischen einer systemspezifischen Rupffrequenz der Kupplung und einer systemspezifischen Eckfrequenz des Gesamtsystems des Kupplungsaktors eingestellt wird.

2. Verfahren nach Anspruch 1, **dadurch gekennzeichnet, dass** ein dem Positions-Sollwert entsprechendes Positions-Sollwertsignal (14) generiert wird, dass diesem Positions-Sollwertsignal (14) ein einen Wechselsignalanteil enthaltendes Überlagerungssignal derart überlagert wird, dass das Summensignal aus dem Positions-Sollwertsignal (14) und dem Überlagerungssignal im Wesentlichen in dem Positionsraster liegt, und dass mit dem Summensignal als Sollwertsignal der Kupplungsaktor (7) angesteuert wird.

3. Verfahren nach Anspruch 2, **dadurch gekennzeichnet, dass** das Überlagerungssignal in Abhängigkeit von der Lage des Positions-Sollwerts relativ zu dem ersten und zweiten Positions-Rasterwert (9a, 9b) pulsweitenmoduliert wird.

4. Verfahren nach Anspruch 2, **dadurch gekennzeichnet, dass** das Überlagerungssignal mit konstanter Periodendauer pulsweitenmoduliert wird, und dass das Puls-Pausen-Verhältnis in Abhängigkeit von der Lage des Positions-Sollwerts relativ zu dem ersten und zweiten Positions-Rasterwert (9a, 9b) verändert wird.

5. Verfahren nach Anspruch 2, **dadurch gekennzeichnet, dass** das Überlagerungssignal mit konstanter Pulsdauer pulsweitenmoduliert wird, und dass die Pausendauer in Abhängigkeit von der Lage des Positions-Sollwerts relativ zu dem ersten und zweiten Positions-Rasterwert (9a, 9b) verändert wird.

6. Verfahren nach Anspruch 2, **dadurch gekennzeichnet, dass** das Überlagerungssignal mit konstanter Pausendauer pulsweitenmoduliert wird, und dass die Pulsdauer in Abhängigkeit von der Lage des Positions-Sollwerts relativ zu dem ersten und zweiten Positions-Rasterwert (9a, 9b) verändert wird.

7. Verfahren nach Anspruch 1, **dadurch gekennzeichnet, dass** die Grundfrequenz des Wechselsignalanteils 1 bis 10 Hz, insbesondere 3 bis 7 Hz, insbesondere 4 bis 6 Hz und bevorzugt etwa 5 Hz beträgt.

## Claims

1. A method of setting the clutch moment of a clutch (1), in particular a clutch situated in a power train of a motor vehicle, the clutch (1) being adjusted with the help of a clutch actuator (7) that has at least two actuator parts which are positionable at raster values (9a, 9b, 9c) of a position raster relative to each other, a position target value situated between the raster values (9a, 9b, 9c) that corresponds to a clutch moment target value being determined, and the actuator parts being positioned relative to each other at a raster value (9a) of the position raster that is proximate to the position target value, **characterized in that** in addition to the first position raster value (9a) a second position raster value (9b) is determined in such a way that the position target value is situated between the first position raster value (9a) and the second position raster value (9b), and that the actuator parts are positioned alternately at the first position raster value (9a) and the second position raster value (9b) in such a way that the mean clutch moment matches the clutch moment target value more exactly than the clutch moments of the first and second position raster value (9a, 9b), the alternating positioning having an alternating signal portion with a frequency that is set between a system-specific juddering frequency of the clutch and a system-specific limiting frequency of the overall system of the clutch actuator.

2. The method according to Claim 1, **characterized in that** a position target value signal (14) that corresponds to the position target value is generated, that an overlying signal containing an alternating signal portion is superimposed on this position target value signal (14) in such a way that the sum signal of the position target value signal (14) and the overlying signal lies essentially in the position raster, and that the clutch actuator (7) is actuated with the sum signal as the target value signal.

3. The method according to Claim 2, **characterized in that** the overlying signal is pulse-width modulated depending on the location of the position target value relative to the first and second position raster values (9a, 9b).

4. The method according to Claim 2, **characterized in that** the overlying signal is pulse-width modulated with constant period duration, and that the pulse-pause ratio is changed depending on the location of the position target value relative to the first and second position raster values (9a, 9b).

5. The method according to Claim 2, **characterized in that** the overlying signal is pulse-width modulated with constant pulse duration, and that the length of the pauses is changed depending on the location of the position target value relative to the first and second position raster values (9a, 9b).

6. The method according to Claim 2, **characterized in that** the overlying signal is pulse-width modulated with constant pause duration, and that the length of the pulses is changed depending on the location of the position target value relative to the first and second position raster values (9a, 9b).

7. The method according to Claim 1, **characterized in that** the fundamental frequency of the alternating signal portion is 1 to 10 Hz, in particular 3 to 7 Hz, in particular 4 to 6 Hz, and preferably about 5 Hz.

## Revendications

1. Procédé de réglage du couple d'embrayage d'un embrayage (1) disposé, en particulier, dans une chaîne cinématique d'un véhicule automobile, où l'embrayage (1) est réglé à l'aide d'un actionneur d'embrayage (7) qui présente au moins deux pièces d'actionneur qui, au niveau de valeurs de trame (9a, 9b, 9c) d'une trame de positions, sont positionnables l'une par rapport à l'autre, où est calculée une valeur théorique de position correspondant à une valeur théorique de couple d'embrayage et située entre les valeurs de trame (9a, 9b, 9c) de la trame de positions, et où les pièces de l'actionneur sont positionnées, l'une par rapport à l'autre, au niveau d'une valeur de trame (9a) de la trame de positions, voisine de la valeur théorique de position, **caractérisé en ce qu'**en plus de la première valeur de trame de positions (7a), on calcule une deuxième valeur de trame de positions (9b), de manière telle que la valeur théorique de position se situe entre la première valeur de trame de positions (9a) et la deuxième valeur de trame de positions (9b), et **en ce que** les pièces de l'actionneur sont positionnées, de façon alternée, au niveau de la première valeur de trame de positions (9a) et au niveau de la deuxième valeur de trame de positions (9b), de manière telle que le couple d'embrayage moyen coïncide avec la valeur théorique de couple d'embrayage, plus précisément que les couples d'embrayage des première et deuxième valeurs de trame de positions (9a, 9b), où le positionnement effectué de façon alternée présente une partie de signal alternatif comprenant une fréquence qui est réglée entre une fréquence de broutage de l'embrayage, spécifique du système, et une fréquence de coupure de tout le système de l'actionneur d'embrayage, spécifique du système.

2. Procédé selon la revendication 1, **caractérisé en ce qu'**est généré un signal de valeur théorique de position (14) correspondant à la valeur théorique de position, **en ce qu'**un signal de superposition contenant une partie du signal alternatif est superposé à ce signal de valeur théorique de position (14), de manière telle que le signal totalisateur se composant du signal de valeur théorique de position (14) et du signal de superposition se trouve essentiellement dans la trame de positions, et **en ce que** l'actionneur d'embrayage (7) est piloté avec le signal totalisateur servant de signal de valeur théorique.

3. Procédé selon la revendication 2, **caractérisé en ce que** le signal de superposition est modulé en largeur d'impulsion en fonction de la position de la valeur théorique de position, par rapport aux première et deuxième valeurs de trame de positions (9a, 9b).

4. Procédé selon la revendication 2, **caractérisé en ce que** le signal de superposition est modulé en largeur d'impulsion avec une durée de période constante, et **en ce que** le rapport impulsions / pauses est modifié en fonction de la position de la valeur théorique de position, par rapport aux première et deuxième valeurs de trame de positions (9a, 9b).

5. Procédé selon la revendication 2, **caractérisé en ce que** le signal de superposition est modulé en largeur d'impulsion avec une durée d'impulsion constante, et **en ce que** la durée de pauses est modifiée en fonction de la position de la valeur théorique de position, par rapport aux première et deuxième valeurs de trame de positions (9a, 9b).

6. Procédé selon la revendication 2, **caractérisé en ce que** le signal de superposition est modulé en largeur d'impulsion avec une durée de pauses constante, et **en ce que** la durée d'impulsion est modifiée en fonction de la position de la valeur théorique de position, par rapport aux première et deuxième valeurs de trame de positions (9a, 9b).

7. Procédé selon la revendication 1, **caractérisé en ce que** la fréquence de base de la partie du signal alternatif est comprise entre 1 Hz et 10 Hz, en particulier entre 3 Hz et 7 Hz, en particulier entre 4 Hz et 6 Hz et, de préférence, à peu près égale à 5 Hz.
